# EUROPEAN PATENT SPECIFICATION

(11) **EP 3 085 062 B1**
(45) Date of publication and mention of the grant of the patent: **06.02.2019**
(21) Application number: 14871277.1
(22) Date of filing: 17.12.2014
(51) Int. Cl.: H04L 12/58, H04L 12/743

(54) **STATELESS MESSAGE ROUTING**
ZUSTANDSLOSES NACHRICHTENROUTING
ROUTAGE DE MESSAGE SANS ÉTAT

(30) Priority: 20.12.2013 EP 13198910
(43) Date of publication of application: 26.10.2016
(73) Proprietor: Rovio Entertainment Ltd, 02150 Espoo (FI)
(72) Inventor: HONKALA, Juhani, FI-02150 Espoo (FI); TALJA, Ari, FI-02150 Espoo (FI)
(74) Representative: Boco IP Oy Ab
(86) International application number: PCT/FI2014/051015
(87) International publication number: WO 2015/092139

(56) References cited:
- FI-A- 20 125 022
- US-A1- 2012 011 068
- US-A1- 2012 011 068
- US-A1- 2013 339 475
- US-B1- 7 466 810
- ROY J. BYRD STEPHEN E. SMITH S. PETER DE JONG: "An actor-based programming system", ACM, 2 PENN PLAZA, SUITE 701 - NEW YORK USA, 23 June 1982 (1982-06-23), XP040160044, New York
- LEGAND L BURGE III * SYSTEMS AND COMPUTER SCIENCE HOWARD UNIVERSITY WASHINGTON ET AL: "JMAS: A Java-Based Mobile Actor System for Distributed Parallel Computation", USENIX,, 1 April 1999 (1999-04-01), pages 1-16, XP061011912, [retrieved on 1999-04-01]
- STEVEN LAUTERBURG ET AL: "A Framework for State-Space Exploration of Java-Based Actor Programs", 2010 INTERNATIONAL WORKSHOP ON INNOVATIVE ARCHITECTURE FOR FUTURE GENERATION HIGH PERFORMANCE, IEEE, 1730 MASSACHUSETTS AVE., NW WASHINGTON, DC 20036-1992 USA, 16 November 2009 (2009-11-16), pages 468-479, XP058117821, ISSN: 1527-1366, DOI: 10.1109/ASE.2009.88 ISBN: 978-0-7695-3891-4
- 'Wikipedia: Simple Mail Transfer Protocol' WIKIPEDIA, [Online] 12 December 2013, XP008182362 Retrieved from the Internet: <URL:HTTP://EN.WIKIPEDIA.ORG/W/INDEX.PHP?TI TLE=SIMPLE_MAIL_TRANSFER_PROTOCOL&OLDID=585 759339> [retrieved on 2015-03-26]

## Description

### Technical field

Examples of the present invention relate to messaging in a scalable cluster. More specifically, the examples of the present invention relate to methods, apparatuses and a related computer program product for defining a scalable cluster and delivering messages within. Examples of the present invention may be applicable to actor based messaging

### Background

Many network services require high level of adaptation, self-organization, load balancing etc. For example in real time messaging, turn-based multiplayer games or other similar applications it is important that the messages are delivered promptly. As participants may join and leave the services as they wish, a robust and cost effective delivery of messages is a challenge. Messages need to be delivered to all participants in a service and each user can be active in multiple services. Delivering all messages to all parties is one method and sharing states (routing tables with address information) continuously is another method of delivering the messages. As the number of parties may be enormous, it is not efficient to deliver all messages to all parties. Sharing states may also bring considerable overhead to the messaging as the number of parties as well as their locations change.

US2012/011068 A1 discloses a system and method of electronic and physical mail categorization and targeted delivery, US8584228 B1 discloses packet authentication and encryption in virtual networks, WO2006/122366 discloses dynamic address mapping and US2013/339475 discloses systems and methods for cluster lag.

Article "An Actor-Based Programming System" by Roy J. Byrd et al, published by ACM on 23 June 1982 discloses an actor-based programming system, where actors have a name which is used to refer to the actor in a message transmission, and an internal form of the name which is not revealed to the programmer.

Article "JMAS: A Java-Based Mobile Actor System for Distributed Parallel Computation" by Legland L. Burge III and K.M. George published by The USENIX Association discloses a Java-Based Mobile Actor System JMAS which implements a simple location-dependent naming strategy where each actor has a globally unique identifier, which is bound to only one address.

US 2012/011068 discloses a mail delivery system for both physical and electronic mail.

Article "A Framework for State-Space Exploration of Java-Based Actor Programs" by Steven Lauterburg et al, published in the 2009 IEEE/ACM International Conference on Automated Software Engineering discloses actors with a unique actor name, in other words its virtual address, and a mailbox.

### Summary

Therefore there is a need for an approach for defining address information for a party sending and/or receiving a message.

According to one example embodiment, a method according to independent claim 1 is disclosed.

According to another example embodiment, a computer program product according to independent claim 7 is disclosed.

According to another example embodiment, an apparatus according to independent claim 12 is disclosed.

### Brief description of the figures

The embodiments of the invention are illustrated by way of example - not by way of limitation, in the figures of the accompanying drawings:
Figure 1 illustrates an example cluster.
Figure 2 further illustrates the example cluster.
Figure 3 further illustrates a flow chart defining how an example cluster is defined.
Figure 4 illustrates a flow chart defining how an example message delivery.
Figure 5 illustrates a simplified message delivery.
Figure 6 illustrates an example node device.
Figure 7 illustrates an example network.

### Description of some embodiments

The following embodiments are exemplary only. Although the specification may refer to "an", "one", or "some" embodiment(s), this does not necessarily mean that each such reference is to the same embodiment(s), or that the feature only applies to a single embodiment. Single features of different embodiments may be combined to provide further embodiments.

In the following, features of the invention will be described with a simple example of a system architecture in which various embodiments of the invention may be implemented. Only elements relevant for illustrating the embodiments are described in detail. Various implementations of the information system comprise elements that are suitable for the example embodiments and may not be specifically described herein.

Examples of a method, a computer readable medium, an apparatus and a computer program product for providing architecture for delivering messages are disclosed.

As used herein, the term "actor" refers to a computational entity capable of having a state and as response to an event, for example a message, is capable of altering the state. Furthermore the actor may be capable of, among other things, making local decisions, create more actors, send messages, and determine how to respond to the messages received. An actor may represent for example:
- a user, referred as user actor hereafter;
- a chat room, referred as chat room actor hereafter;
- a game state, referred as game state actor hereafter;
- a multiplayer game state, referred as multiplayer game state actor hereafter.

The list of example actors above is not exhaustive. Various types of actors can be introduced depending on need. The actors may be independent and they may also be equal and the actors are capable of communicating with other actors by at least sending or receiving messages.

As used herein, the term "actorID" refers to data that is used to authenticate an actor. The data can be any data that can be used to individually authenticate an actor. Examples of such data are for example strings of numbers or letters or symbols or a combination of all previously mentioned.

As used herein, the term "message" refers to an object of communication containing a discrete set of data sent from one actor to another. The message may contain, but is not limited to, for example, an actorID identifying the actor sending the message and another actorID identifying the actor receiving the message, message content and type of the message. The type of the message may be embedded into the message content. The message may be human-readable or non-human-readable and it may be sent between the actors (persons, devices, applications and any combinations thereof). It can be for example a chat message from a user to another user, a game event from an actor to another, information to be delivered from one application to another application etc.

As used herein, the term "virtual node" (virtual node) refers to an abstract group of actors. An actor is associated with a virtual node based on its actorID. The actors may be associated with virtual nodes using consistent hashing algorithm.

As used herein, the term "node" refers to a physical computational entity capable of managing virtual nodes associated with it. The virtual nodes are associated with the nodes deterministically using a mathematical model and the nodes use same model for defining the virtual node to node mapping. Each node is responsible for a group of virtual nodes. At least one of the nodes may be implemented using cloud computing services, which may appear to be provided by real server hardware but are in fact served up by virtual hardware and simulated by software running on one or more real machines.

As used herein, the term "cluster" refers to a group of nodes which are connected to work together and can be in some cases seen as a single system. The nodes may be connected by a network comprising any combination of hardware and software components enabling a process in one node to send or receive information to or from another process in another node. The network may be, for example, a local area network, a home network, a storage area network, a campus network, a backbone network, a cellular network, a metropolitan area network, a wide area network, an enterprise private network, a virtual private network, a private or public cloud or an internetwork, or a combination of any of these.

As used herein, the term "consistent hashing algorithm" refers to an optimized kind of hashing where assignments are done using an algorithm decreasing need for remapping when changes happen. If cluster size changes a number of virtual nodes may be associated with other nodes. Virtual nodes may be associated to new nodes or re-associated to existing nodes. Cluster size may change when the number of actors (like user actors) change. Consistent hashing minimizes number of changes in virtual node assignments. The algorithm requires knowledge of number of the nodes in the cluster and some identification information for the nodes. As a part of the algorithm the nodes can be ordered for example by the identification information, which may comprise for example an address or a unique running number assigned to each of the nodes. Each node in a cluster is responsible for a group of virtual nodes determined by a consistent hashing algorithm.

As used herein, the term "client" refers to an external entity connecting to the cluster. Client may be any kind of device with a user interface like a portable gaming device, a mobile phone, a computer, a pad-device, a media device in a car, a household device like a fridge, a TV etc.

As used herein, the term "actor messaging" refers to messaging between the actors. Several suitable scalable messaging solutions exist like Akka, Riak, Kafka etc. which can be used as a scalable back-end solution for chat systems and game servers among others. Actor messaging may include buffering of messages.

As used herein, the term "external messaging" refers to messaging between the actors and clients. Several suitable messaging solutions exist like WebSocket, https etc. Clients are capable of utilizing the external messaging when sending messages to actors or receiving messages from actors.

As used herein, the term "buffer" refers to an entity for storing data in specified queue. The entity may be region on memory and the data can be organized according to many suitable message queuing protocols, including RabbitMQ, Kafka and other suitable buffering systems.

As used herein, the term "address information" refers to data that is used to define information for delivering a message to correct receiver. The information includes information to which virtual node an actor is assigned to and to which node a virtual node is assigned to.

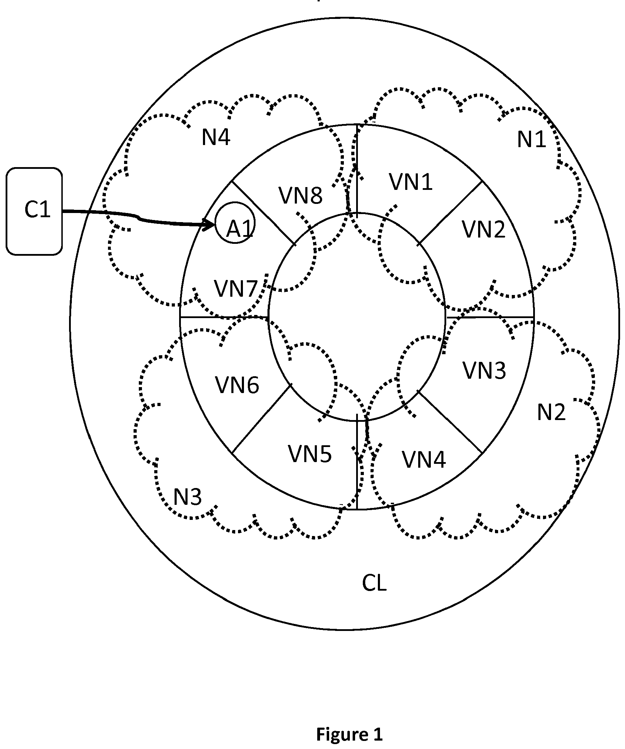

Figure 1 is a diagram of a cluster CL capable of providing architecture for delivering messages according to one example embodiment. The diagram is simplified including only one client C1, one actor A1, four nodes N1 - N4 and eight virtual nodes VN1 - VN8. Number of nodes N, virtual nodes VN associated with the nodes N and actors A associated with virtual nodes VN may vary depending on need.

The client C1 needs only one connection to the cluster CL. Messaging to and from the client C1 is arranged using external messaging. In the cluster CL virtual nodes VN1 - VN8 are associated with the nodes N1 - N4 as follows:
VN1 and VN2 to N1
VN3 and VN4 to N2
VN5 and VN6 to N3
VN7 and VN8 to N4

For each client connection there is a corresponding user actor in the cluster CL. In Figure 1 the client C1 has a corresponding actor A1 (user actor) in virtual node VN7 which belongs to node N4.

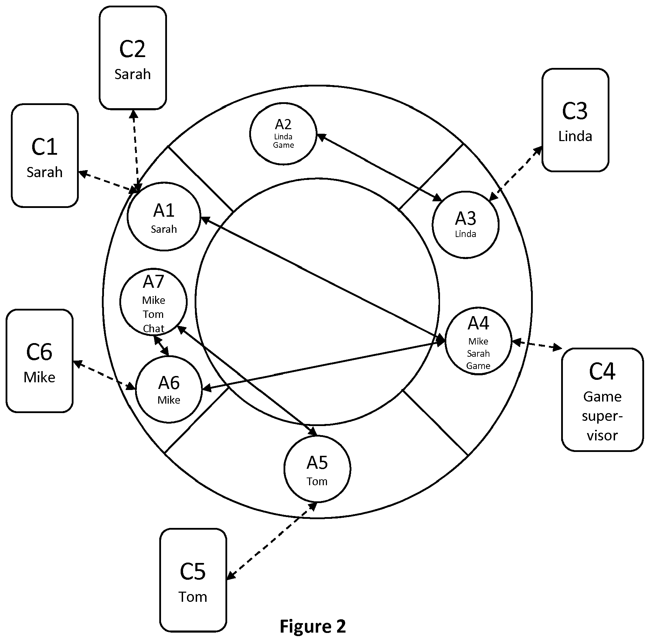

Figure 2 further illustrates messaging between clients C and actors A. Dotted lines between clients C1-C6 and actors A1-A7 represent external messaging and the continuous lines between actors A represent actor messaging. Like in Figure 1 every client C is connected to the cluster CL (not depicted in Figure 2) with one connection to the corresponding actor A.

In Figure 2 the clients C and actors A are identified with user names in order to simplify the illustration. It is to be noted that one person may have more than one clients C. For example person Sarah has two clients, C1 "Sarah" and C2 "Sarah" connected to the same cluster CL and associated with the same actor A1 "Sarah". The more than one clients C of a same person may exist on a same or separate user devices with same or different applications connected to the cluster CL. Furthermore, in some example embodiments, the client C may be an application server or similar running a large number of sessions which may have multiple separate actors A active on the cluster CL.

Let us consider an example where two persons, Mike and Sarah are playing a multiplayer game. They are using for example mobile phones with wireless connection to access the game. They both are connected to the same cluster CL and capable of using services available there. Either of the persons may have initiated a game session and invited the other one to join.

In the example embodiment of Figure 2 client C4 Game-Supervisor, is associated with game actor A4 "Mike-Sarah-Game" with which user actors A1 "Sarah" and A6 "Mike" are exchanging messages using actor messaging. The messages may be game events relating to current status or action in a game. In case the messages originate from or are addressed to clients C1 "Sarah", C2 "Sarah", C6 "Mike" or C4 "Game-Supervisor" external messaging is used. In general: in the gaming example user actors take care of handling incoming and outgoing messages for the clients C and forwards messages between relevant gaming actors.

Let us consider an example where two persons, Tom and Mike are chatting using a messaging application. They are using for example laptops with wireless connection to access the messaging application. They both are connected to the same cluster CL and capable of using services available there. Either of the persons may have initiated a chatting session and invited the other one to join.

In another example embodiment of Figure 2 is illustrated how clients C5 "Tom" and C6 "Mike" are connected to the user actors "Tom" A5 and "Mike" A6 which are both connected to the messaging thread actor A7 "Tom-Mike-Chat", which is a chatting actor for exchanging messages between users Mike and Tom. As an example Mike types a message using a chat application in his user device to Mike. The message is first delivered to actor A6 "Mike" using external messaging and then, using actor messaging, from actor A6 "Mike" to actor A7 "Mike-Tom-Chat" and forwarded to actor A5 "Tom" and finally to client C5 "Tom" using external messaging. Now Tom is able to read the message using his chat application on his user device. In general: in the chat example user actors take care of handling incoming and outgoing messages for the clients C and forwards messages between relevant messaging threads.

Figure 2 further illustrates an example embodiment where user Linda - client C3 "Linda" is connected to user actor "Linda" A3 which is connected to game actor A2 "Linda-Game". In this example user Linda, client C3 "Linda" or user actor A3 "Linda" is not connected to any other user actor - only to the game actor A2 "Linda game".

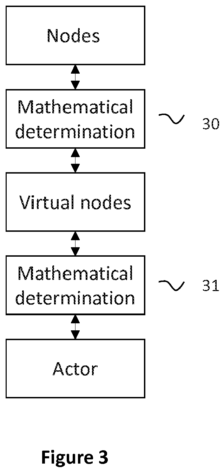

Figure 3 is an flowchart describing an example method how actors A and virtual nodes VN are associated with nodes N. Number of nodes N may vary from one to n. Virtual nodes VN are associated with the nodes N using mathematical determination (30). Actors A are associated with the virtual nodes VN using mathematical determination (31). The mathematical determination in both steps (30 and 31) may use same methods or be different. The mathematical determination may comprise consistent hashing or other suitable methods for mapping. It is to be noted that in some embodiments the actor A may be associated directly to a node N and virtual node VN is not needed. The arrows in figure 3 illustrate that at least some embodiments of the invention may be implemented when defining a cluster CL and at least some when delivering messages in an existing cluster CL.

The simplified examples in figures 1 and 2 depict situations where only few clients C are present. When the number of clients C and thus actors A and nodes N increase the situation gets more complex. Especially as the clients C may join and leave the cluster CL as they wish and also start/stop using applications (generating/end actors A) handling message delivery promptly and efficiently is important.

When designing a cluster CL according to at least some embodiments the number of estimated users can be estimated and then calculated how many nodes N are needed to do all the processing the cluster CL need to be able to handle. When building up a cluster CL the number of nodes N is defined and each node N has individual identification information, which can be for example IP-address, a running numbering assigned to the nodes N, name or other suitable means.

The nodes N are associated with a number of virtual nodes VN. Each virtual node VN has individual address information defining how the virtual nodes VN are organized. The term address information with relation to virtual nodes VN may be an abstract definition how the virtual node VN information is organized in a node N or in a cluster CL.

If the amount of the nodes N needs to be changed, some of the virtual nodes VN are associated with new nodes N using consistent hashing algorithm to minimize the number or re-mappings. The nodes N get information of the current amount of nodes N for example by monitoring the cluster size (e.g. monitoring IP-address space) or there may be a controlling system informing the nodes N about changes in the cluster size.

When a client C wishes to connect for example to a game actor in a cluster CL, a message is generated by an application running in a user device of client C and sent to any node N in the cluster CL using external messaging. The message is redirected to the correct virtual node VN on a correct node N directly by determining how the game actor is assigned to a virtual node VN and the virtual node to a node N. As the same method is used for all clients C and other entities when creating an actor A, there is no need to update and share explicit routing tables including address information for all actors A. The routing tables are look-up tables, which are used to store and share address information for actors A in a cluster CL. One benefit of at least one embodiment is that there is no need to synchronize the routing tables regarding how each virtual node VN and actor A are associated in the cluster CL. As the mapping is consistent, the correct virtual node VN and correct node N are always determined purely using the mathematical algorithms, which take away the need for a shared mapping table. The mappings can be calculated on the go or they can be determined in advance. A node N is aware of which virtual nodes VN belong to which nodes N but the nodes N do not have to interact otherwise. Another way of managing messaging is to send all messages always to all actors A, which would yield excessive load on actors A and messaging pathways.

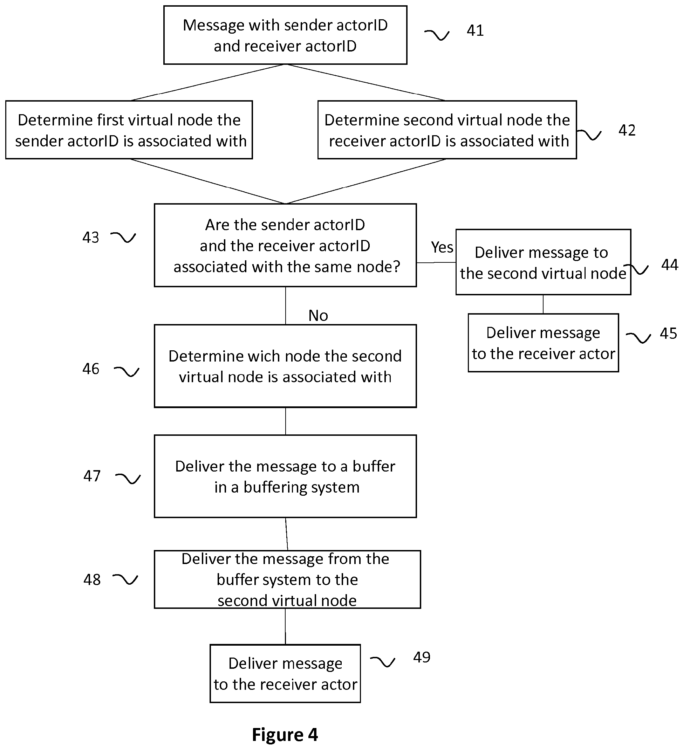

Figure 4 illustrates an example embodiment where delivery of a message is shown as a flow chart. In step 41 a message is received or obtained, the message containing at least sender actorID and receiver actorID identifying sender actor and receiver actor of the message. In step 42 a mathematical algorithm is used to determine which virtual node VN (first virtual node) the sender actorID is associated with and which virtual node VN (second virtual node) the receiver actorID is associated with. It is to be noted that the determination of actorIDs in step 42 can be done in any order.

In step 43 it is checked if the sender actorID and the receiver actorID are associated with the same node N.
If yes - the message is delivered to the second virtual node VN - step 44 and further to the receiver actor - step 45.
If no - it is determined, using a mathematical algorithm, which node N the second virtual node VN is associated with - step 46.

In the latter case the message is delivered to a buffer in a buffer system- step 47. The message is then delivered or obtained from the buffer to the second virtual node VN - step 48 and finally to the receiver actor - step 49.

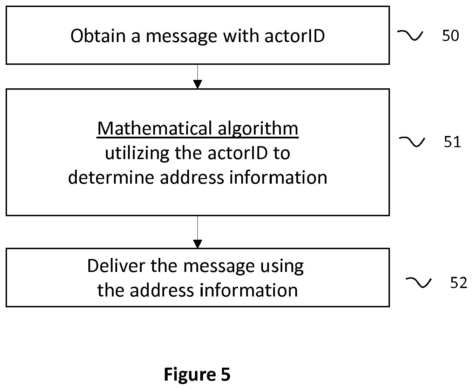

Figure 5 illustrates an example embodiment where a message containing an actorID is obtained, 50. The actorID identifies, at least partly, an actor A.

Utilizing the actorID in at least one mathematical algorithm, 51 to determine address information for the actor and delivering, 52 the message to the actor using the address information.

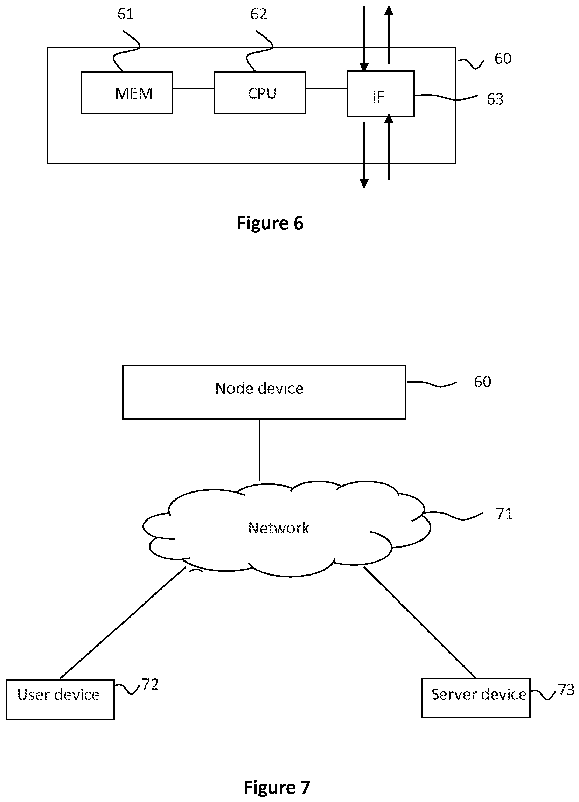

Figure 6 illustrates an example node device. As described earlier the node N refers to a physical or virtual computational entity capable of managing virtual nodes N associated with it. The computational entity may be a device capable of handling data. It may be a server device, computer or like running a chat application or a game application etc. The node device, 60 comprises a memory (MEM), 61 for storing information relating e.g. to the virtual nodes N associated with it, instructions how to handle messages etc. The memory 61 may comprise volatile or non-volatile memory, for example EEPROM, ROM, PROM, RAM, DRAM, SRAM, firmware, programmable logic, etc.

The node device 60 further comprises one or more processor units (CPU), 62 for processing the instructions and running computer programs and an interface unit (IF), 63 for sending and receiving messages.

Figure 7 illustrates an example network system in which at least one embodiment of the present invention may be implemented. The shown network system comprises a node device 60, a user device 72, a server device 73 and network 71. The network 71 represents here any combination of hardware and software components that enables a process in one communication endpoint to send or receive information to or from another process in another, remote communication endpoint. The network 61 may be, for example, a personal area network, a local area network, a home network, a storage area network, a campus network, a backbone network, a metropolitan area network, a wide area network, an enterprise private network, a virtual private network, or an internetwork, or a combination of any of these. The example network system of figure 7 is a simplified illustration depicting only one node device 60, user device 72 and server device 73. As defined earlier the amounts of the devices may vary. The devices are shown as separate units but in some embodiments any of the node device 60, user device 72 or server device 73 may be implemented in a same device. For example the server device 73 may be implemented on the node device 60 acting as a messaging server, a game server, a chat room server etc.

While various aspects of the invention have illustrated and described as block diagrams, message flow diagrams, flow charts and logic flow diagrams, or using some other pictorial representation, it is well understood that the illustrated units, blocks, device, system elements, procedures and methods may be implemented in, for example, hardware, software, firmware, special purpose circuits or logic, a computing device or some combination thereof.

It is apparent to a person skilled in the art that as technology advances, the basic idea of the invention can be implemented in various ways. The invention and its embodiments are therefore not restricted to the above examples, but they may vary within the scope of the claims.

## Claims

1. A method for delivering a message between actors (A1, A2, A3, A4, A5, A6, A6) in a scalable cluster (CL) of nodes (N1, N2, N3, N4), the method comprising:
- receiving (41) by a node a message, the message being sent from a first actor to a second actor, the message containing a first actorID identifying the first actor and a second actorID identifying the second actor;
**characterized in that** the method further comprises:
- determining (42) in the node, using only the first and the second actorIDs, address information for the first and the second actor by using at least one mathematical algorithm configured to determine which virtual node (VN1, VN2, VN3, VN4, VN4, VN6, VN7, VN8) the first actor is associated with and which virtual node (VN1, VN2, VN3, VN4, VN4, VN6, VN7, VN8) the second actor is associated with;
- determining (43) if the first actor and the second actor are associated with the same node; and
- if the first actor and the second actor are associated with the same node, delivering (45) the message to the second actor via the virtual node associated with the second actor using the address information; and
- if the first actor and the second actor are not associated with the same node, determining (46) a second node associated with the virtual node associated with the second actor by using a mathematical algorithm, and delivering (47) the message to a buffer system for further delivering the message to the second actor via the virtual node associated with the second actor.

2. A method according to claim 1, wherein the node has at least one virtual node associated with it.

3. A method according to claim 2, the address information of the at least one virtual node is determined and the address information of the node associated with the virtual node is determined.

4. A method according to claim 1, wherein the address information comprises address information of a node.

5. A method according to any of claims 1 to 4 wherein a consistent hashing algorithm is used in the determination.

6. A method according to any of claims 1 to 5 further comprising delivering the message first to a segment in a buffer associated with the virtual node.

7. A computer program product including one or more sequences of one or more instructions which, when executed by one or more processors, cause an apparatus to at least perform the steps of at least:
- receiving (41) in a node (N1, N2, N3, N4) a message, the message being sent from a first actor to a second actor, the message containing a first actorID identifying the first actor and a second actorID identifying the second actor; **characterized in that** the instructions cause the apparatus to perform the steps
- determining (42) in the node, using only the first and the second actorIDs, address information for the first and the second actor by using at least one mathematical algorithm configured to determine which virtual node (VN1, VN2, VN3, VN4, VN4, VN6, VN7, VN8) the first actor is associated with and which virtual node the second actor is associated with;
- determining (43) if the first actor and the second actor are associated with the same node; and if the first actor and the second actor are associated with the same node, delivering (45) the message to the second actor via the virtual node associated with the second actor using the address information; and
- if the first actor and the second actor are not associated with the same node, determining (46) a second node associated with the virtual node associated with the second actor by using a mathematical algorithm, and delivering (47) the message to a buffer system for further delivering the message to the second actor via the virtual node associated with the second actor.

8. A computer program product according to claim 7, wherein the address information comprises address information of a node (N).

9. A computer program product according to claim 7, wherein the address information of the at least one virtual node is determined and the address information of the node associated with the virtual node is determined.

10. A computer program product according to any of claims 7 to 9, wherein a consistent hashing algorithm is used in the determination.

11. A computer program product according to any of claims 7 to 10 further comprising delivering the message first to a segment in a buffer associated with the virtual node.

12. An apparatus comprising means for:
- receiving by a node a message sent from a first actor to a second actor, the message containing a first actorID identifying, the first actor and a second actorID identifying, the second actor;
**characterized in that** the apparatus comprises means for:
- determining in the node, using only the first and the second actorIDs, address information for the first and the second actor by using at least one mathematical algorithm to determine which virtual node (VN1, VN2, VN3, VN4, VN4, VN6, VN7, VN8) the first actor is associated with and which virtual node (VN1, VN2, VN3, VN4, VN4, VN6, VN7, VN8) the second actor is associated with;
- determining if the first actor and the second actor are associated with the same node;
- if the first actor and the second actor are associated with the same node, delivering the message to the second actor via the virtual node associated with the second actor using the address information; and
- if the first actor and the second actor are not associated with the same node, determining (46) a second node associated with the virtual node associated with the second actor by using a mathematical algorithm, and delivering (47) the message to a buffer system for further delivering the message to the second actor via the virtual node associated with the second actor.

## Patentansprüche

1. Verfahren zur Lieferung einer Nachricht zwischen Akteuren (A1, A2, A3, A4, A5, A6, A6) in einem skalierbaren Cluster (CL) von Knoten (N1, N2, N3, N4), wobei das Verfahren umfasst:
- Empfangen (41) einer Nachricht durch einen Knoten, wobei die Nachricht von einem ersten Akteur zu einem zweiten Akteur gesendet wird, wobei die Nachricht eine erste actorID, die den ersten Akteur identifiziert, und eine zweite actorID, die den zweiten Akteur identifiziert, enthält;
**dadurch gekennzeichnet, dass** das Verfahren ferner umfasst:
- Bestimmen (42) von Adressinformationen für den ersten und den zweiten Akteur im Knoten, mit Hilfe nur der ersten und der zweiten actorID, durch Verwendung von mindestens einem mathematischen Algorithmus, der eingerichtet ist, um zu bestimmen, mit welchem virtuellen Knoten (VN1, VN2, VN3, VN4, VN4, VN6, VN7, VN8) der erste Akteur assoziiert ist und mit welchem virtuellen Knoten (VN1, VN2, VN3, VN4, VN4, VN6, VN7, VN8) der zweite Akteur assoziiert ist;
- Bestimmen (43), ob der erste Akteur und der zweite Akteur mit dem gleichen Knoten assoziiert sind; und
- wenn der erste Akteur und der zweite Akteur mit dem gleichen Knoten assoziiert sind, Liefern (45) der Nachricht an den zweiten Akteur über den mit dem zweiten Akteur assoziierten virtuellen Knoten mit Hilfe der Adressinformationen; und
- wenn der erste Akteur und der zweite Akteur nicht mit dem gleichen Knoten assoziiert sind, Bestimmen (46) eines zweiten Knotens, der mit dem mit dem zweiten Akteur assoziierten virtuellen Knoten assoziiert ist, durch Verwendung eines mathematischen Algorithmus, und Liefern (47) der Nachricht an ein Puffersystem zum Weiterleiten der Nachricht an den zweiten Akteur über den mit dem zweiten Akteur assoziierten virtuellen Knoten.

2. Verfahren nach Anspruch 1, wobei der Knoten mindestens einen mit ihm assoziierten virtuellen Knoten aufweist.

3. Verfahren nach Anspruch 2, wobei die Adressinformationen des mindestens einen virtuellen Knotens bestimmt werden und die Adressinformationen des mit dem virtuellen Knoten assoziierten Knotens bestimmt werden.

4. Verfahren nach Anspruch 1, wobei die Adressinformationen Adressinformationen eines Knotens umfassen.

5. Verfahren nach einem der Ansprüche 1 bis 4, wobei in der Bestimmung ein konsistenter Hashing-Algorithmus verwendet wird.

6. Verfahren nach einem der Ansprüche 1 bis 5, das ferner umfasst, dass die Nachricht zuerst an ein Segment in einem mit dem virtuellen Knoten assoziierten Puffer geliefert wird.

7. Computerprogrammprodukt, umfassend eine oder mehrere Folgen von einer oder mehreren Anweisungen, die bei Ausführung durch einen oder mehrere Prozessoren bewirken, dass eine Vorrichtung mindestens die folgenden Schritte mindestens ausführt:
- Empfangen (41) einer Nachricht in einem Knoten (N1, N2, N3, N4), wobei die Nachricht von einem ersten Akteur zu einem zweiten Akteur gesendet wird, wobei die Nachricht eine erste actorID, die den ersten Akteur identifiziert, und eine zweite actorID, die den zweiten Akteur identifiziert, enthält;
**dadurch gekennzeichnet, dass** die Anweisungen die Vorrichtung zur Ausführung der Schritte veranlassen:
- Bestimmen (42) von Adressinformationen für den ersten Akteur und den zweiten Akteur im Knoten, mit Hilfe nur der ersten und der zweiten actorID, durch Verwendung von mindestens einem mathematischen Algorithmus, der eingerichtet ist, um zu bestimmen, mit welchem virtuellen Knoten (VN1, VN2, VN3, VN4, VN4, VN6, VN7, VN8) der erste Akteur assoziiert ist und mit welchem virtuellen Knoten der zweite Akteur assoziiert ist;
- Bestimmen (43), ob der erste Akteur und der zweite Akteur mit dem gleichen Knoten assoziiert sind; und
- wenn der erste Akteur und der zweite Akteur mit dem gleichen Knoten assoziiert sind, Liefern (45) der Nachricht an den zweiten Akteur über den mit dem zweiten Akteur assoziierten virtuellen Knoten mit Hilfe der Adressinformationen; und
- wenn der erste Akteur und der zweite Akteur nicht mit dem gleichen Knoten assoziiert sind, Bestimmen (46) eines zweiten Knotens, der mit dem mit dem zweiten Akteur assoziierten virtuellen Knoten assoziiert ist, durch Verwendung eines mathematischen Algorithmus, und Liefern (47) der Nachricht an ein Puffersystem zum Weiterleiten der Nachricht an den zweiten Akteur über den mit dem zweiten Akteur assoziierten virtuellen Knoten.

8. Computerprogrammprodukt nach Anspruch 7, wobei die Adressinformationen Adressinformationen eines Knotens (N) umfassen.

9. Computerprogrammprodukt nach Anspruch 7, wobei die Adressinformationen des mindestens einen virtuellen Knotens bestimmt werden und die Adressinformationen des mit dem virtuellen Knoten assoziierten Knotens bestimmt werden.

10. Computerprogrammprodukt nach einem der Ansprüche 7 bis 9, wobei in der Bestimmung ein konsistenter Hashing-Algorithmus verwendet wird.

11. Computerprogrammprodukt nach einem der Ansprüche 7 bis 10, das ferner umfasst, dass die Nachricht zuerst an ein Segment in einem mit dem virtuellen Knoten assoziierten Puffer geliefert wird.

12. Vorrichtung umfassend Mittel zum:
- Empfangen einer von einem ersten Akteur zu einem zweiten Akteur gesendeten Nachricht durch einen Knoten, wobei die Nachricht eine erste actorID, die den ersten Akteur identifiziert, und eine zweite actorID, die den zweiten Akteur identifiziert, enthält;
**dadurch gekennzeichnet, dass** die Vorrichtung Mittel umfasst zum
- Bestimmen von Adressinformationen für den ersten und den zweiten Akteur im Knoten, mit Hilfe nur der ersten und der zweiten actorID, durch Verwendung von mindestens einem mathematischen Algorithmus, um zu bestimmen, mit welchem virtuellen Knoten (VN1, VN2, VN3, VN4, VN4, VN6, VN7, VN8) der erste Akteur assoziiert ist und mit welchem virtuellen Knoten (VN1, VN2, VN3, VN4, VN4, VN6, VN7, VN8) der zweite Akteur assoziiert ist;
- Bestimmen, ob der erste Akteur und der zweite Akteur mit dem gleichen Knoten assoziiert sind;
- wenn der erste Akteur und der zweite Akteur mit dem gleichen Knoten assoziiert sind, Liefern der Nachricht an den zweiten Akteur über den mit dem zweiten Akteur assoziierten virtuellen Knoten mit Hilfe der Adressinformationen; und
- wenn der erste Akteur und der zweite Akteur nicht mit dem gleichen Knoten assoziiert sind, Bestimmen (46) eines zweiten Knotens, der mit dem mit dem zweiten Akteur assoziierten virtuellen Knoten assoziiert ist, durch Verwendung eines mathematischen Algorithmus, und Liefern (47) der Nachricht an ein Puffersystem zum Weiterleiten der Nachricht an den zweiten Akteur über den mit dem zweiten Akteur assoziierten virtuellen Knoten.

## Revendications

1. Procédé de livraison d'un message entre des acteurs (A1, A2, A3, A4, A5, A6, A6) dans un cluster évolutif (CL) de noeuds (N1, N2, N3, N4), ledit procédé comprenant les étapes consistant à :
- recevoir (41) un message par un noeud, ledit message étant envoyé depuis un premier acteur à un deuxième acteur, ledit message contenant un premier actorID identifiant le premier acteur et un deuxième actorID identifiant le deuxième acteur;
**caractérisé en ce que** ledit procédé consiste également à :
- déterminer (42), dans le noeud, des informations d'adresse pour le premier et le deuxième acteurs, à l'aide seulement du premier et du deuxième actorID, par l'utilisation d'au moins un algorithme mathématique configuré pour déterminer celui des noeuds virtuels (VN1, VN2, VN3, VN4, VN4, VN6, VN7, VN8) auquel le premier acteur est associé et celui des noeuds virtuels (VN1, VN2, VN3, VN4, VN4, VN6, VN7, VN8) auquel le deuxième acteur est associé;
- déterminer (43) si le premier acteur et le deuxième acteur sont associés au même noeud; et
- si le premier acteur et le deuxième acteur sont associés au même noeud, livrer (45) le message au deuxième acteur par le biais du noeud virtuel associé au deuxième acteur à l'aide des informations d'adresse; et
- si le premier acteur et le deuxième acteur ne sont pas associés au même noeud, déterminer (46) un deuxième noeud associé au noeud virtuel associé au deuxième acteur par l'utilisation d'un algorithme mathématique, et livrer (47) le message à un système tampon pour la livraison ultérieure du message au deuxième acteur par le biais du noeud virtuel associé au deuxième acteur.

2. Procédé selon la revendication 1, dans lequel le noeud a au moins un noeud virtuel qui lui est associé.

3. Procédé selon la revendication 2, dans lequel les informations d'adresse dudit au moins un noeud virtuel sont déterminées et les informations d'adresse du noeud associé au noeud virtuel sont déterminées.

4. Procédé selon la revendication 1, dans lequel les informations d'adresse comprennent des informations d'adresse d'un noeud.

5. Procédé selon l'une des revendications 1 à 4, dans lequel un algorithme de hachage cohérent est utilisé dans la détermination.

6. Procédé selon l'une des revendications 1 à 5, comprenant également la livraison du message d'abord à un segment dans un tampon associé au noeud virtuel.

7. Produit programme d'ordinateur comprenant une ou plusieurs séquences d'une ou de plusieurs instructions qui, lorsqu'elles sont exécutées par un ou plusieurs processeurs, amènent un dispositif au moins à exécuter les étapes consistant au moins à :
- recevoir (41) un message dans un noeud (N1, N2, N3, N4), ledit message étant envoyé depuis un premier acteur à un deuxième acteur, ledit message contenant un premier actorID identifiant le premier acteur et un deuxième actorID identifiant le deuxième acteur;
**caractérisé en ce que** les instructions amènent l'appareil à exécuter les étapes consistant à
- déterminer (42), dans le noeud, des informations d'adresse pour le premier et le deuxième acteurs, à l'aide seulement du premier et du deuxième actorID, par l'utilisation d'au moins un algorithme mathématique configuré pour déterminer celui des noeuds virtuels (VN1, VN2, VN3, VN4, VN4, VN6, VN7, VN8) auquel le premier acteur est associé et celui des noeuds virtuels auquel le deuxième acteur est associé;
- déterminer (43) si le premier acteur et le deuxième acteur sont associés au même noeud; et
- si le premier acteur et le deuxième acteur sont associés au même noeud, livrer (45) le message au deuxième acteur par le biais du noeud virtuel associé au deuxième acteur à l'aide des informations d'adresse; et
- si le premier acteur et le deuxième acteur ne sont pas associés au même noeud, déterminer (46) un deuxième noeud associé au noeud virtuel associé au deuxième acteur par l'utilisation d'un algorithme mathématique, et livrer (47) le message à un système tampon pour la livraison ultérieure du message au deuxième acteur par le biais du noeud virtuel associé au deuxième acteur.

8. Produit programme d'ordinateur selon la revendication 7, dans lequel les informations d'adresse comprennent des informations d'adresse d'un noeud (N).

9. Produit programme d'ordinateur selon la revendication 7, dans lequel les informations d'adresse dudit au moins un noeud virtuel sont déterminées et les informations d'adresse du noeud associé au noeud virtuel sont déterminées.

10. Produit programme d'ordinateur selon l'une des revendications 7 à 9, dans lequel un algorithme de hachage cohérent est utilisé dans la détermination.

11. Produit programme d'ordinateur selon l'une des revendications 7 à 10, comprenant également la livraison du message d'abord à un segment dans un tampon associé au noeud virtuel.

12. Dispositif comprenant des moyens pour:
- recevoir, par un noeud, un message envoyé depuis un premier acteur à un deuxième acteur, ledit message contenant un premier actorID identifiant le premier acteur et un deuxième actorID identifiant le deuxième acteur;
**caractérisé en ce que** ledit dispositif comprend des moyens pour
- déterminer, dans le noeud, des informations d'adresse pour le premier et le deuxième acteurs, à l'aide seulement du premier et du deuxième actorID, par l'utilisation d'au moins un algorithme mathématique pour déterminer celui des noeuds virtuels (VN1, VN2, VN3, VN4, VN4, VN6, VN7, VN8) auquel le premier acteur est associé et celui des noeuds virtuels (VN1, VN2, VN3, VN4, VN4, VN6, VN7, VN8) auquel le deuxième acteur est associé;
- déterminer si le premier acteur et le deuxième acteur sont associés au même noeud;
- si le premier acteur et le deuxième acteur sont associés au même noeud, livrer le message au deuxième acteur par le biais du noeud virtuel associé au deuxième acteur à l'aide des informations d'adresse; et
- si le premier acteur et le deuxième acteur ne sont pas associés au même noeud, déterminer (46) un deuxième noeud associé au noeud virtuel associé au deuxième acteur à l'aide d'un algorithme mathématique, et livrer (47) le message à un système tampon pour la livraison ultérieure du message au deuxième acteur par le biais du noeud virtuel associé au deuxième acteur.
